# EUROPÄISCHE PATENTSCHRIFT

(11) **EP 2 756 754 B1**
(45) Veröffentlichungstag und Bekanntmachung des Hinweises auf die Patenterteilung: **04.01.2017**
(21) Anmeldenummer: 14151567.6
(22) Anmeldetag: 17.01.2014
(51) Int. Cl.: A01P 1/00, A01N 1/02, A01N 47/44

(54) **Verfahren zur Behandlung von Nabelschnurgewebe, insbesondere im Zusammenhang mit der Konservierung des Gewebes**
Method for the treatment of umbilical cord tissue, in particular associated with the preservation of the tissue
Procédé de traitement du tissu du cordon ombilical, notamment en rapport avec la conservation du tissu

(30) Priorität: 17.01.2013 EP 13151676
(43) Veröffentlichungstag der Anmeldung: 23.07.2014
(73) Patentinhaber: VITA 34 AG, 04103 Leipzig (DE)
(72) Erfinder: Alt, Rüdiger, 04155 Leipzig (DE); Yolcu, Deniz, 40589 Düsseldorf (DE)
(74) Vertreter: Hertin und Partner Rechts- und Patentanwälte PartG mbB

(56) Entgegenhaltungen:
- US-A1- 2011 151 556
- ELCHALAL U ET AL: "Postpartum umbilical cord blood collection for transplantation: A comparison of three methods", AMERICAN JOURNAL OF OBSTETRICS & GYNECOLOGY, MOSBY, ST LOUIS, MO, US, Bd. 182, Nr. 1, 1. Januar 2000 (2000-01-01), Seiten 227-232, XP027442305, ISSN: 0002-9378, DOI: 10.1016/S0002-9378(00)70517-5 [gefunden am 2000-01-01]
- PRAT I ET AL: "Transplantation perspectives in umbilical cord blood banks", TRANSFUSION AND APHERESIS SCIENCE, ELSEVIER SCIENCE, LONDON, GB, Bd. 38, Nr. 3, 1. Juni 2008 (2008-06-01), Seiten 193-197, XP022716849, ISSN: 1473-0502, DOI: 10.1016/J.TRANSCI.2008.03.007 [gefunden am 2008-06-13]
- S ARMITAGE ET AL: "Cord blood banking in London: the first 1000 collections", BONE MARROW TRANSPLANTATION, Bd. 24, Nr. 2, 1. Juli 1999 (1999-07-01), Seiten 139-145, XP055056723, ISSN: 0268-3369, DOI: 10.1038/sj.bmt.1701881
- FRIEDMAN ET AL: "Umbilical Cord Mesenchymal Stem Cells: Adjuvants for Human Cell Transplantation", BIOLOGY OF BLOOD AND MARROW TRANSPLANTATION, KLUGE CARDEN JENNINGS PUBLISHING, CHARLOTTESVILLE, VA, US, Bd. 13, Nr. 12, 18. November 2007 (2007-11-18), Seiten 1477-1486, XP022348850, ISSN: 1083-8791, DOI: 10.1016/J.BBMT.2007.08.048
- ZHANG H T ET AL: "Neural stem cells differentiation ability of human umbilical cord mesenchymal stromal cells is not altered by cryopreservation", NEUROSCIENCE LETTERS, LIMERICK, IE, Bd. 487, Nr. 1, 3. Januar 2011 (2011-01-03), Seiten 118-122, XP027509228, ISSN: 0304-3940, DOI: 10.1016/J.NEULET.2010.10.008 [gefunden am 2010-10-12]
- KENJI IMURA+ ET AL: "Usefulness of cord-blood harvesting for autologous transfusion in surgical newborns with antenatal diagnosis of congenital anomalies", JOURNAL OF PEDIATRIC SURGERY, Bd. 36, Nr. 6, 1. Juni 2001 (2001-06-01), Seiten 851-854, XP055056707, ISSN: 0022-3468, DOI: 10.1053/jpsu.2001.23952
- C. M. KHODABUX ET AL: "The use of cord blood for transfusion purposes: current status", VOX SANGUINIS, Bd. 97, Nr. 4, 1. November 2009 (2009-11-01), Seiten 281-293, XP055056727, ISSN: 0042-9007, DOI: 10.1111/j.1423-0410.2009.001212.x

## Beschreibung

Die Erfindung betrifft ein Verfahren zur Behandlung von Nabelschnüren bzw. Nabelschnurgewebe oder der Zellen in diesen, um die Gewebe oder Zellen zu desinfizieren, beispielsweise um die Keimbelastung zu reduzieren. Die Erfindung betrifft auch eine Weiterbildung dieses Verfahrens im Zusammenhang mit der Konservierung bzw. Kryokonservierung von Nabelschnurgewebe oder Teilen hiervon. Ferner betrifft die Erfindung auch eine Weiterbildung dieses Verfahrens im Zusammenhang mit der Isolierung von Zellen aus Nabelschnurgewebe oder Teilen hiervon.

Bei natürlichen Geburten ist die Kontamination der Nabelschnur durch vaginale und anale Keime besonders hoch. Im Stand der Technik sind verschiedene Verfahren bekannt, um Nabelschnüre bzw. Nabelschnurgewebe so zu behandeln, dass die Keimbelastung reduziert wird. Dies ist beispielsweise bei der Entnahme von Nabelschnurblut, bei der Gewinnung der gesamten Nabelschnur, beim Transport des Gewebes oder aber im Zusammenhang mit der Konservierung/Kryokonservierung von Nabelschnüren bzw. Nabelschnurgewebe wichtig.

Die Desinfektion der Nabelschnur mit Chlorhexidin (ein aus der Zahnmedizin bekanntes Antiseptikum) wird zur Verhinderung von aszendierenden Infektionen in der Geburtshilfe eingesetzt und bekämpft erfolgreich Bakterien, Pilze und Hefen. In den Dokumenten (29), (30) und (31) wird die Desinfektion oder Dekontamination von Nabelschnur bzw Nabelschnurgewebe mit Chlorhexidin beschrieben. Es reduziert die Entwicklung von Nabelschnurentzündungen (Omphalitiden) und senkt signifikant die Säuglingssterblichkeit (33). Die antiseptische Wirkung des Chlorhexidins beruht auf der Implementierung in die bakterielle Zellmembran, wodurch es zu einem Verlust kleiner Moleküle und zur Ausfällung zytoplasmatischer Proteine kommt. Seine höchste antibakterielle Aktivität entfaltet Chlorhexidin gegenüber grampositiven Kokken, wobei Staphylococcus aureus der am häufigsten isolierte Keim auf der menschlichen Nabelschnur ist. Der Einsatz von 4%-igem Chlorhexidin (34) allein oder von 0,5%-igem Chlorhexidin in alkoholischer Lösung (35) führt zu signifikanten Dekontaminationen von Staphylococcus aureus auf den Nabelschnüren.

Neben der geburtshilflich-klinischen Anwendung von Chlorhexidin gibt es gegenwärtig keine hinreichenden desinfizierenden Methoden zur Keimreduktion von Nabelschnüren und Nabelschnurgewebe, die vor allem eine Weiterbehandlung des Gewebes in Form einer Isolierung der darin befindlichen Zellen bzw. einer Kryokonservierung des Gewebes bzw. der Zellen beinhalten. Die Behandlung mit den Mitteln des Standes der Technik ist nachteilig, da aus den desinfizierten Nabelschnüren keine Zellen gewonnen werden können, die zum einen gut wachsen und zum anderen ausreichend vital sind.

Diese Aussage spiegelt den aktuellen Status quo wider, dass eine Gewebebank aus Nabelschnurproben nicht ohne weiteres aufgebaut werden kann, da mit einer hohen Ausschussrate aufgrund von Kontaminationen zu rechnen ist. Insbesondere kann die Dienstleistung der autologen Einlagerung von Nabelschnurgewebe werdenden Eltern nicht als zuverlässiger Service angeboten werden, da ein erhebliches Risiko besteht, dass das eingelagerte Gewebe am Ende mikrobiell kontaminiert und für die Eltern im schlimmsten Fall nicht nutzbar ist.

Der Erfindung liegt daher die Aufgabe zugrunde, ein gut reproduzierbares Verfahren bereitzustellen, mit welchem die Keimbelastung von Nabelschnurgewebe so reduziert werden kann, dass das Nabelschnurgewebe bzw. die Nabelschnur und/oder die hierin enthaltenen Zellen sehr lange gelagert bzw. transportiert oder aber konserviert, bevorzugt kryokonserviert, werden können. Weiterhin ist es Aufgabe der Erfindung, ein Verfahren bereit zu stellen, mit dem Zellen, insbesondere Stammzellen aus dem erfindungsgemäß behandelten Nabelschnurgewebe in hoher Anzahl und Qualität gewonnen werden können.

Diese Stammzellen sollen für regenerative medizinische Anwendungen aufbereitet werden, Essentielle Kriterien für den Erhalt ihres Stammzellpotentials sind die Überlebensfähigkeit (Viabilität) und die Vermehrungsrate (Proliferationsrate) nach der Isolierung der Stammzellen aus ihrem Gewebeverbund. Das eingesetzte Desinfektionsmittel besitzt erheblichen Einfluss auf die Überlebens- und Vermehrungsrate der Stammzellen. Zum Einen können die isolierten Zellen direkt vom Desinfektionsmittel beeinträchtigt und zerstört werden, wodurch es zu signifikant geringeren Überlebensraten (Zellzahlen) kommt. Zum Anderen besteht bei einer unzureichenden Dekontamination der Keime eine horizontale Übertragung in die Zellkultur, wodurch es zu bakteriell induzierten Proliferationsverlusten kommt. Die Zellen sind dann nicht mehr fähig, sich zu vermehren und Kolonien zu bilden.

Gelöst wird die Aufgabe dadurch, dass der Dekontaminations-, Wasch- bzw. der Transportlösung oder Lagerungsflüssigkeit für die Nabelschnur bzw. das Nabelschnurgewebe oder den hierin enthaltenen Zellen Polyhexanid zugesetzt wird. Es war überraschend, dass Nabelschnur bzw. Nabelschnurgewebe mit einer derartigen Lösung so desinfiziert werden kann, dass sie anschließend so transportier- bzw. konservierbar ist, dass das Gewebe weiteren Verwendungen zugeführt werden kann. Hierbei kann es sich beispielsweise um Verfahren handeln, bei denen aus dem Nabelschnurgewebe die enthaltenen Zellen, insbesondere Stammzellen gewonnen werden. Der durchschnittliche Fachmann kann mit Hilfe von Routineversuchen selbstständig ermitteln, in welcher Konzentration er den Wirkstoff Polyhexanid beim Waschen bzw. Transportieren oder aber Konservieren von Nabelschnur bzw. Nabelschnurgewebe einsetzen muss. Besonders bevorzugt ist das In-Kontakt-bringen der Nabelschnur mit einer Lösung, die Polyhexanid umfasst im Zusammenhang mit der Konservierung bzw. Kryokonservierung von zerkleinertem Nabelschnurgewebe.

Die Desinfektion ist im Sinne der Erfindung bevorzugt als Vorbehandlung von Nabelschnurgewebe zu verstehen. Die Behandlung erfolgt als vorgelagerter Arbeitsschritt vor der Weiterbehandlung des Nabelschnurgewebes in Form einer Konservierung, insbesondere der Kryokonservierung, des Gewebes. Es wurden im Zusammenhang mit der Erfindung umfangreiche Testungen zur Desinfektion der Nabelschnüre mit verschiedenen antiseptisch wirksamen Substanzen durchgeführt. Es kamen Jodlösungen, alkoholische Lösungen, Taurolidin und Chlorhexidin sowie Polyhexanid zum Einsatz. Die ersten drei Substanzen zeigten keine ausreichenden Dekontaminationen und erzeugten erhebliche zelluläre Schäden durch Austrocknungen. Die Verwendung von Chlorhexidin basierte auf unterschiedlichen chemischen Darreichungsformen: Chlorhexidindigluconat (Chlorhexamed Forte 0,2%^{R} GlaxoSmithKline Consumer Healthcare GmbH & Co. KG), Chlorhexidinacetat (Uro-Tainer^{R} B.Braun) und Polyhexanid als Chlorhexidinpolymer (Prontosan^{R} Wundspüllösung B.Braun). Nach der Desinfektion der Nabelschnüre wurde das Gewebe enzymatisch aufgelöst und die Zellpopulation extrahiert. Anschließende Analysen der Überlebensfähigkeit (Zellzahl pro Gramm Nabelschnurgewebe) und der Proliferationsrate (CFC pro Gramm Nabelschnurgewebe) - bevorzugt in Zusammenhang mit einer Konservierung bzw. Kryokonservierung - gaben Aufschluss über die Auswirkungen der Antiseptika auf die Integrität und die Qualität der Zellen. Chlorhexidindigluconat zeigte in allen aufbereiteten Nabelschnüren geringe Zellausbeuten und Proliferationsraten. Die Versuche mit Chlorhexidinacetat und Polyhexanid hingegen zeigten überraschend hohe Werte für die Überlebensfähigkeit der Zellen. Aber nur Polyhexanid qualifizierte sich (anders als die anderen getesteten Substanzen wie Chlorhexidinacetat) uneingeschränkt als potentes Desinfektionsmittel zur Dekontamination der Nabelschnüre, da es auf der einen Seite neben hohen Zellzahlen auch die stärksten Proliferationsraten aufwies bzw. ermöglichte und es sich auf der anderen Seite, aufgrund seiner moderaten Durchdringung des Gewebes, leichter als alle anderen getesteten Mittel aus dem Gewebeverband auswaschen lässt. Dies verringert gefährliche Nebenwirkungen, wie sie bei den anderen Chlorhexidin-Verbindungen auftreten. Es war völlig überraschend, dass trotz der großen strukturellen Ähnlichkeit von aller drei Chlorhexidinderivate bei der Desinfektion der Nabelschnüre deutlich unterschiedliche Ergebnisse erzielt wurden. Nur Polyhexanid, als Chlorhexidinpolymer mit verlängerter Molekülkette, weist den überraschenden Vorteil auf, dass das Gewebe - obwohl es nun moderat durchdrungen wird - sehr gut und ausreichend desinfiziert wird und das Desinfektionsmittel anschließend erstaunlich gut ausgewaschen werden kann. Überraschenderweise kann nur durch die Verwendung von Polyhexanid sichergestellt werden, dass aus den desinfizierten Nabelschnüren Stammzellen aufbereitet werden können, die zum einen eine hohe Vermehrungsrate und zum anderen eine gute Überlebensfähigkeit aufweisen. Bei der Verwendung von den anderen Verbindungen ist es nicht möglich, aus desinfizierten Nabelschnüren eine ausreichend hohe Menge an solchen Stammzellen zu gewinnen, die das gewünschte und weiter zu verfolgende Stammzellpotential aufweisen. Bei der Verwendung von Polyhexanid ist das Vermögen der Stammzellen, die aus Nabelschnüren gewonnen werden, sich zu vermehren, überraschend gut.

Transportlösungen zur Zwischenlagerung von Nabelschnurgewebe enthalten häufig Antibiotika bzw. Antimykotika, um die Keimbelastung der Nabelschnüre zu reduzieren. Penicillin, Streptomycin, Gentamicin und Amphotericin B sind zu diesem Zweck verwendet worden. Die Antibiotika decken aber nicht die ganze vaginale und anale Keimflora ab. Außerdem sind Penicilline instabil und für einen längeren Transportweg oder eine Lagerung vor dem Einsatz nicht geeignet. Des Weiteren ist bekannt, dass Aminoglycosidantibiotika wie Gentamicin nicht mit Penicillinen zusammen in einer Infusion verabreicht werden dürfen, da es zwischen den beiden Stoffgruppen zu einer physikochemischen Inaktivierung kommt. Derselbe Effekt tritt auf, wenn beide Stoffe gemeinsam in einer Transportlösung eingesetzt werden. Zuletzt ist festzuhalten, dass Amphotericin B in Deutschland nicht als steriles Arzneimittel angeboten wird, was seine Verwendung in einem GMPkonformen Prozess erschwert.

Die Kombinationen von Antibiotika, die bisher zur Dekontamination oder Desinfektion von Nabelschnüren verwendet werden sind unzureichend und führen zu hohen Kontaminationsraten. Gong et al. berichteten, dass 50 % aller Nabelschnüre aus vaginalen Geburten bakteriell kontaminiert waren, obwohl in der Transportlösung Gentamicin (100 µg/mL) und Amphotericin B (5 µg/mL) enthalten waren und die Nabelschnüre 30 sec mit 70 % Ethanol gereinigt wurden. Die Kontamination von gleich behandelten Nabelschnüren nach Kaiserschnitt lag dagegen bei nur 1%. Daten weisen darauf hin, dass die normalerweise zu erwartende mikrobielle Belastung von Nabelschnüren ohne dekontaminierende Maßnahmen bei über 90 % liegt.

Ein bevorzugtes Verfahren zur Konservierung von Nabelschnurgewebe umfasst die folgenden Schritte:
a. Bereitstellen der Nabelschnur,
b. In-Kontakt-bringen der Nabelschnur mit einer Lösung, die Polyhexanid umfasst,
c. Verschiebung der Partikelgrößenverteilung des Nabelschnurgewebes, beispielsweise durch Zerkleinerung in Form von Zerschneiden und
d. ggf. Kühlen, bevorzugt Tiefkühlen, ganz bevorzugt Einfrieren des unter Schritt c. gewonnenen Materials.

In einer weiteren bevorzugten Ausführungsform der Erfindung wird das Nabelschnurgewebe vor Waschung in einer Transportlösung aufbewahrt, die eine isotonische Salzlösung, beispielsweise eine isotonische Kochsalzlösung ist und bevorzugt Zusätze wie Antibiotika und/oder Antimykotika, insbesondere Gentamicin, Clindamycin und/oder Ciprofloxacin, umfasst.

In einer weiteren bevorzugten Ausführungsform der Erfindung erfolgt das In-Kontakt-bringen der Nabelschnur mit einer Lösung, die Polyhexanid umfasst, bei Raumtemperatur innerhalb eines Zeitraumes von 15 - 50 Minuten, bevorzugt von 20 - 40 Minuten, besonders bevorzugt von 30 Minuten. Innerhalb des bevorzugten Zeitraumes erfolgt eine besonders gute Desinfektion der Nabelschnüre.

Überraschenderweise kann durch das bevorzugte Verfahren zur Konservierung von Nabelschnurgewebe ein desinfiziertes Material durch eine mit Antibiotika-versetzte Transportlösung und einer Waschung mit Polyhexanid zur Verfügung gestellt werden, aus dem Zellen mit überraschend guter Qualität gewonnen werden können. In einer weiteren bevorzugten Ausführungsform der Erfindung ist vorgesehen, dass das Zerkleinern als ein Zerschneiden erfolgt, insbesondere als ein Zerschneiden in Scheiben mit einer Scheibendicke im Bereich von 3 - 10 mm, bevorzugt 4 - 8 mm. Besonders bevorzugt ist es hierbei, dass die Scheiben eine im Wesentlichen ähnliche oder nahezu identische Scheibendicke aufweisen, so dass gleichmäßige Scheiben geschnitten werden. Es war bemerkenswert, dass die bevorzugte Scheibendicke dazu führt, dass die Isolierung der Stammzellen aus ihrem Gewebeverbund besonders gut umsetzbar ist.

Selbstverständlich kann es in einer weiteren Ausgestaltungsform der Erfindung auch vorgesehen sein, auf das Zerkleinern des Nabelschnurgewebes völlig zu verzichten.

In einer weiteren bevorzugten Ausführungsform des erfindungsgemäßen Verfahrens ist vorgesehen, dass das Kühlen bzw. das Einfrieren der Nabelschnüre bzw. von Nabelschnurgeweben in einem flüssigen Medium erfolgt, welches 5 - 20 Volumenprozent DMSO umfasst, bevorzugt 10 Volumenprozent. Bevorzugt ist es, dass die Endkonzentration im Gewebe ca. 5 - 6 Volumenprozent beträgt. Es war völlig überraschend, dass die Überlebensfähigkeit der isolierten Stammzellen mittels der bevorzugten Konzentration von DMSO besonders verbessert ist.

In einer weiteren bevorzugten Ausführungsform der Erfindung erfolgt während des Einfrierschrittes eine Vorinkubation mit dem Kryokonservierungsmittel. Bevorzugt erfolgt die Kryokonservierung oder die Lagerung des Gewebes in mehreren Portionen, zum Beispiel in Beuteln. Es ist beispielsweise bevorzugt, dass das Gewebe in einem geschlossenen System mit einem Kryokonservierungsmittel vorinkubiert bzw. inkubiert wird und ohne Öffnung des Systems eine Verteilung der Nabelschnurscheiben in mehrere Behältnisse erfolgt, wobei eine Trennung der Behältnisse voneinander ohne Öffnung des Systems möglich ist. Diese bevorzugte Ausführungsform hat den Vorteil, dass eine Sterilkontrolle vorgenommen werden kann, wobei nur ein Beutel geöffnet werden muss. In einer weiteren bevorzugten Ausführungsform der Erfindung erfolgt das Einfrieren mit einem Temperaturverlauf von 1 - 60°C pro Minute, bevorzugt 1 - 10°C pro Minute, ganz besonders bevorzugt 1°C pro Minute. Es war überraschend, dass die bevorzugten Temperaturverläufe eine beachtliche Überlebensfähigkeit und sehr gute Vermehrungsraten nach der Isolierung der Stammzellen aus ihrem Gewerbeverbund und ihrem Auftauen ermöglichen.

In einer weiteren bevorzugten Ausführungsform der Erfindung ist vorgesehen, dass nach dem Zerkleinern des Nabelschnurgewebes dieses zerkleinerte Gewebe vor oder auch nach einem vorangegangenen Einfrier- und/oder Lagerschritt mit Enzymen, insbesondere Kollagenase, Hyaluronidase und/oder Papain in Kontakt gebracht wird. Bevorzugte Mischungen bestehen mindestens aus Kollagenase und Hyaluronidase und/oder Pronase, Papain oder Dispase. Weiterhin können mit Vorteilen auch neutrale Protease und/oder Trypsin eingesetzt werden. Der Einsatz der bevorzugten Enzyme führt zu besonders guten der Stammzellen.

In einer weiteren bevorzugten Ausführungsform des erfindungsgemäßen Verfahrens ist vorgesehen, dass die Zellisolierung mit Hilfe eines Zellsiebes erfolgt, bevorzugt mit einem Zellsieb aufweisend eine Siebgröße von 100 µm, gefolgt von einem Zellsieb mit einer Siebgröße von 40 µm. Es war völlig überraschend, dass mit Hilfe des Zellsiebes Zellen mit besonders guter Integrität gewonnen werden können.

In einer weiteren bevorzugten Ausführungsform des erfindungsgemäßen Verfahrens ist vorgesehen, dass die Zellisolierung mit Hilfe einer Dichtegradientenzentrifugation erfolgt. Bevorzugt wird ein Trennmedium beispielsweise auf Basis von Ficoll, Percoll und/oder Saccharose in einer geeigneten Dichte verwendet, sodass eine Abscheidung von vitalen Zellen von übrigen Bestandteilen des Nabelschnurgewebes, wie zum Beispiel unverdauten Geweberesten, erreicht wird. Ein besonders bevorzugtes Trennmedium zur Isolation bzw. Abtrennung von Zellen, insbesondere Stammzellen ist Ficoll in einer Dichte von 1,073-1,077 kg/L. Überraschenderweise gestattet die Verwendung der bevorzugten Trennmedien auf Basis von Ficoll, Percoll und/oder Saccharose die Bereitstellung von Nabelschnüren, aus denen Zellen in hoher Zellzahl und guten Proliferationsraten gewonnen werden können.

Bevorzugt erfolgt die Zellzahlbestimmung, insbesondere von Nabelschnurzellen bzw. Stammzellen, unter Verwendung von Fluoreszenzfarbstoffen, welche die Unterscheidung lebender, kernhaltiger Zellen von anderen Strukturen, wie zum Beispiel tote, Zellen, Zelltrümmer, Blutzellen oder auch kleinen, unverdauten Geweberesten erlaubt. Besonders bevorzugt erfolgt die Zellzahlbestimmung durchflusszytometrisch unter Verwendung von Acridin Orange und/oder Hoechst 33342 zur Markierung kernhaltiger Zellen und Propidium Iodid und/oder 7-AAD zur Markierung und Diskriminierung toter Zellen.

Besonders bevorzugt kann das erfindungsgemäße Verfahren zur Aufbewahrung von in Nabelschnurgewebe enthaltenen Zellen, insbesondere Stammzellen (bevorzugt mesenchymale Stammzellen und/ oder endotheliale Progenitorzellen) verwendet werden.

Bevorzugt Antibiotika im Sinne der Erfindung sind:
1. β-Lactame
   a. typische Vertreter sind Penicilline, Cephalosporine, Monobactame und Carbapeneme
2. β-Lactamase-Inhibitoren (i.d.R. in Kombination mit β-Lactamen)
   a. Typische Kombinationen sind Clavulansäure + Amoxicillin, Sulbactam + Ampicillin, Tazobactam + Piperacillin
3. Glykopeptide
   a. Typische Vertreter sind Vancomycin und Teicoplanin
4. Tetracycline
   a. Typische Vertreter sind Tetracycline, z.B. Tetracyclin, Chlortetracyclin, Oxytetracyclin, Demeclocyclin, Doxycyclin, Lymecyclin, Meclocyclin, Methacyclin, Minocyclin, Rolitetracyclin, Tigecyclin
5. Makrolide
   a. Typische Vertreter sind Erythromycin, Clarithromycin, Azithromycin
6. Aminoglycosid-Antibiotika
   a. Typische Vertreter sind Amikacin, Apramycin, Geneticin (G418), Gentamicine, Kanamycin, Netilmicin, Neomycin, Paromomycin, Spectinomycin, Streptomycin, Tobramycin
7. Polypeptid-Antibiotika
   a. Typische Vertreter sind Bacitracin,Gramicidin,Tyrothricin,
8. Chinolone
   a. Typische Vertreter sind Ciprofloxacin, Clioquinol, Danofloxacin, Difloxacin, Enrofloxacin, Fleroxacin, Flumequin, Gatifloxacin, Grepafloxacin, Ibafloxacin, Levofloxacin, Marbofloxacin, Moxifloxacin, Nalidixinsäure, Norfloxacin, Ofloxacin, Orbifloxacin, Oxolinsäure, Pipemidinsäure, Sarafloxacin, Sparfloxacin, Temafloxacin, Nadifloxacin
9. Sulfonamide
   a. Typische Vertreter sind Sulfamethoxazol, Sulfadoxin, Sulfacarbamid; Sulfasalazin
10. Lincosamide
   a. Typische Vertreter sind Clindamycin, Lincomycin

Bevorzugte Enzyme sind Peptidasen, Glycosidasen, und/oder Nukleasen. Weitere bevorzugte Enzyme sind die folgenden:
1. bevorzugte Glycosidase
   a. Hyaluronidase
2. bevorzugte Peptidasen
   a. Akrosin, Aminopeptidase B, Bromelain, Calpain I, Carboxypeptidase A, Cathepsin, Chymotrypsin, Clostripain, Collagenase, Dispase, Elastase, Ficain, Kallikrein, Papain, Pepsin, Plasmin, Peptidase, Oligopeptidase, Proteinase K, Thermolysin, Trypsin,
3. bevorzugte Peptidasegemische oder spezifische Handelsprodukte:
   a. Pronase, Pancreatin, Neutrale Protease, Liberase (Roche),
4. bevorzugte Nukleasen
   a. Desoxyribonuklease, Ribonuklease

Bevorzugte Antimykotika im Sinne der Erfindung sind:
1. Polyene, insbesondere
   a. Amphotericin-B-Desoxycholat
   b. Liposomales Amphotericin B
   c. Amphotericin-B-Lipidkomplex
   d. Nystatin
2. Triazole, insbesondere
   a. Fluconazol
   b. Itraconazol
   c. Voriconazol
   d. Posaconazol
   e. Echinocandine
   f. Caspofungin
   g. Anidulafungin
   h. Micafungin
3. Antimetabolite, insbesondere
   a. Flucytosin

Im Weiteren soll die Erfindung anhand eines Beispiels näher erläutert werden, ohne auf dieses Beispiel beschränkt zu sein.

Im Zusammenhang mit dem Waschen, dem Transportieren oder aber dem Konservieren von Nabelschnurgewebe kann es bevorzugt sein, die Nabelschnur mit Prontosan Wundspülung zu waschen. Dieses Waschen kann beispielsweise für 30 Minuten bei Raumtemperatur so erfolgen, so dass eine kontinuierliche Mischung erfolgt.

Prontosan enthält Polyhexanid, welches als Polymer weniger stark ins Gewebe eindringt als vergleichbare monomere Wirkstoffe. Betain ist ein Wirkstoff, der die Oberflächenspannung herabsetzt und Biofilme angreift.

Außerdem wird beispielhaft ein Transportmedium zur Verminderung der Keimbelastung eingesetzt, welches Gentamicin, Clindamycin und Ciprofloxacin enthält. Alle Wirkstoffe sind über mehrere Monate temperaturstabil und werden als sterile Infusionslösungen in Arzneimittelqualität eingesetzt.

Die Transportlösung und Waschung der Nabelschnur reduziert die Keimbelastung überraschend effektiv. Ca. 90% der Proben sind nach der Behandlung nicht mehr mit nachweisbaren Keimen belastet. Getestet wurden aerobe und anaerobe Keime mittels BD Bactec-Test (Becton Dickinson) Die im Gewebe enthaltenen mesenchymalen Stammzellen (CFU-f) werden durch die 30-minütige Behandlung mit Prontosan nicht geschädigt. Die Antibiotika sind ebenfalls unschädlich für Vitalität und Wachstumsfähigkeit der mesenchymalen Nabelschnurzellen.

### Isolation von Zellen aus Nabelschnurgewebe:

### Zerkleinerung des Gewebes:

Viele Verfahren beschreiben eine anatomische Präparation der Nabelschnur mit einer Trennung verschiedener Gewebeteile wie Blutgefäße, Wharton's Jelly und umgebende epitheliale und bindegewebige Gewebeteile (8-10). In den meisten Fällen wird das Wharton's Jelly nach seiner Gewinnung mittels Skalpell und/oder Schere in sehr kleine Stücke zerschnitten (1-3 mm) (1,10-13). Diese Gewebestücke werden dann entweder in Kultur genommen oder enzymatisch verdaut. Manche Autoren verwenden auch einen longitudinalen Schnitt ohne das Gewebe weiter zu zerkleinern und verdauen größere Gewebestücke (4,14). Auch das Auskratzen der Blutgefäße nach Eröffnung ggf. zusammen mit einer enzymatischen Vorbehandlung ist bekannt (15, 32).

Alle diese Verfahren sind aufwendig und kompliziert und daher schlecht reproduzierbar. Zudem bergen intensive manuelle Eingriffe ein erhöhtes Risiko, dass Kontaminationen eingetragen werden. Beide Faktoren führen dazu, dass die bisher bekannten Verfahren sich nur schwer in einen standardisierten oder halbautomatisierten Prozess überführen lassen, was eine Voraussetzung für das effiziente und zuverlässige Banking von Nabelschnurgewebe wäre.

In der Lösung wird die Nabelschnur mit Hilfe eines entsprechenden Schneidewerkzeuges (bevorzugt als Wegwerfgerät konzipiert) in gleichmäßige Scheiben von 5-6 mm Dicke zerschnitten. Dabei wird das Gewebe so wenig wie möglich gequetscht. Ein Vorteil der Lösung ist, dass mehr vitale und funktionsfähige Zellen erhalten werden als bei einer intensiven Zerkleinerung des Gewebes mit Schere und Skalpell in 1-3 mm große Stücke. Das widerspricht der Erwartung, dass das Gewebe gründlich zerkleinert werden sollte, um Angriffsfläche für Enzyme zu schaffen.

Die Scheiben werden anschließend mit Puffer gewaschen, wodurch sich Blut und Blutgerinnsel gut entfernen lassen. Die gleichmäßige Dicke der Scheiben erleichtert die anschließende Kryokonservierung des Gewebes, da gewährleistet ist, dass das Gewebe von allen Seiten gleichmäßig mit DMSO durchdrungen wird, unabhängig davon, ob eine Nabelschnur im Querschnitt dick oder dünn ist.

### Zellisolation/Verdau:

Der Verdau des Gewebes durch Enzyme ist aus verschiedenen Arbeiten bekannt (1,3,4,8,9,11,12,14,16,17). Die Ausbeute ist allerdings sehr unterschiedlich und oft schlecht.

Ein enzymatischer Verdau mit Kollagenase II, 0.075% (weight/total digestion volume) und Trypsin, 0.125% (weight/total digestion volume) über 4 Stunden ist bekannt(8). Ein Verdau mit Kollagenase und Pronase ggf. zusammen mit DNase ist bekannt(15). Schütteln bei 100 /min ist bekannt(8).

Die Mehrzahl der augenblicklich verwendeten Verfahren beschreibt eine Zellisolation durch ein Kulturverfahren einschl. Zellexpansion(15-21). Dabei werden häufig Gewebestücke auf Plastik aufgebracht, um MSCs aus diesen Gewebestücken auswachsen zu lassen.

Anschließend wird das Material gekühlt oder eingefroren.

Beispiel eines besonders bevorzugten Verfahrens
1. Der Umgang mit der Keimbelastung der Nabelschnur (fast bei jeder Nabelschnur ist mit einer Besiedlung durch Keime zu rechnen; Sectiones sind weniger belastet als vaginale Geburten)
a. Transportlösung ist eine isotonische Kochsalzlösung zur Infusion mit folgenden Zusätzen in Arzneimittelqualität:

| | |
|---|---|
| Gentamicin | 50 mg/mL |
| Clindamycin | 10 mg/mL |
| Ciprofloxacin | 30 mg/mL |

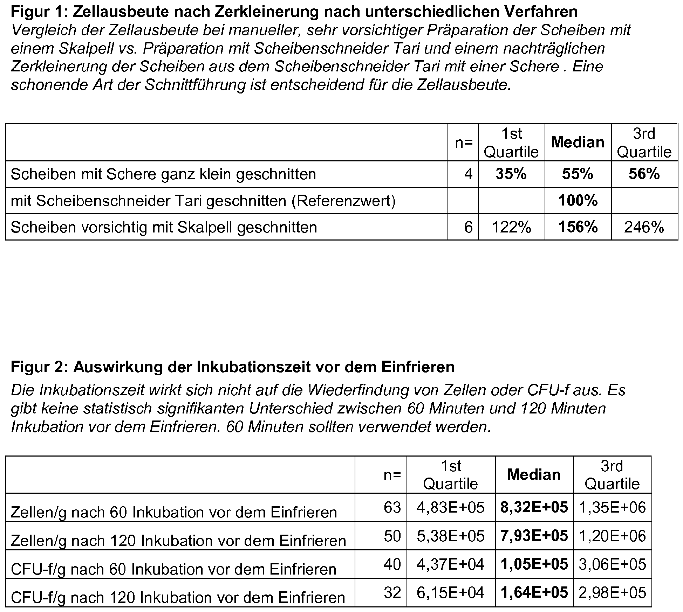

b. Waschung der Nabelschnur mit Prontosan Wundwaschlösung (Firma B.Braun, Wirkstoffe Polyhexanid und Betain) für 30 min bei RT in einem Über-Kopf-Mischer
2. Die Zerkleinerung bzw. Vorbehandlung des Nabelschnurgewebes
a. Art der Zerkleinerung: Schneiden der Nabelschnur in gleichmäßige Scheiben von ca. 5 mm mit einem Nabelschnurschneider; Wichtige Eigenschaften: ein ziehender Schnitt wird realisiert, der das Gewebe so wenig wie möglich quetscht; Realisierung durch eine entsprechende Klingenführung relativ zum Gewebe oder durch eine vibrierende Klinge;
b. Art der Schnitte: möglichst wenige Schnitte, ziehend, nicht quetschend und daher schonend für Gewebe und enthaltene Stammzellen (Figur 1). Die Scheiben sollen ca. 5-6 mm Dick sein. Die Dicke wird durch zwei Parameter begrenzt: (1) lassen sich die Blutreste noch gut entfernen und (2) kann das Gefrierschutzmittel (DMSO) das gesamte Gewebe gleichmäßig penetrieren, bevor es eingefroren wird. Die bevorzugte Dicke liegt bei <10 mm.
c. Methode zur Entfernung der Blutreste und Blutgerinnsel aus dem Nabelschnurgewebe: Waschen der Nabelschnurscheiben mit NaCl; Bei Scheiben lassen sich die Blutreste und Blutgerinnsel ganz automatisch sehr gut entfernen. Das geht viel leichter als bei anderen anatomischen Präparationsmethoden, wo die Blutgefäße evtl. mit einer Kanüle ausgespült werden müssen oder die Blutgefäße ganz entfernt bzw. separiert werden müssen. Bevorzugt werden die Nabelschnurscheiben über einem Sieb gewaschen. Bevorzugt ist auch, dass die Waschlösung mit einer serologischen Pipette aus dem Waschbecher abgesaugt wird.

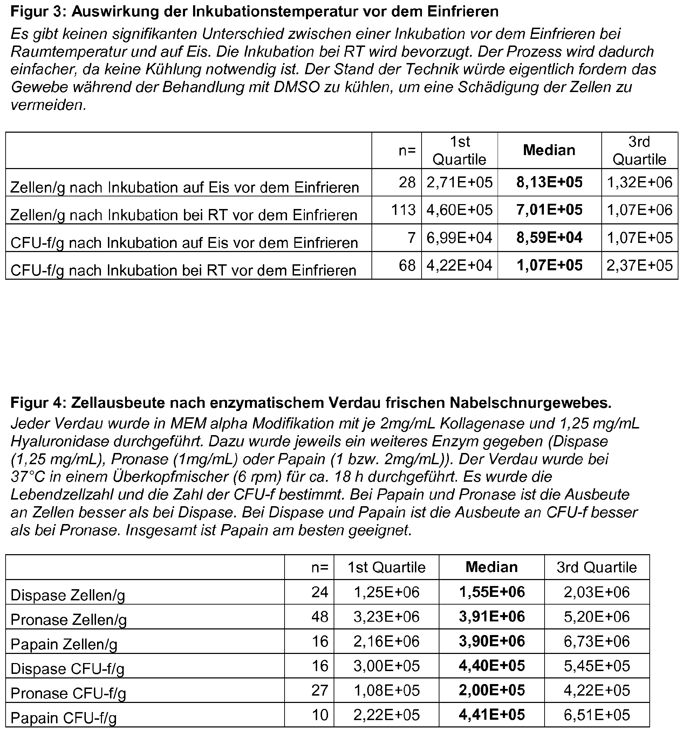

3. Der Einfrierprozess
a. Auswahl eines geeigneten Kryokonservierungsmediums:
   10 % DMSO,
   2 % humanes Serumalbumin (Firma Grifols, Lösung zur Infusion) MEM alpha Modifikation, Qualität: ATMP-Ready der Firma PAA
b. Vorinkubation mit dem Kryokonservierungsmittel:
   ca. 1-2 Stunde bei RT (Figur 2, Figur 3). Ohne Vorinkubation kann die Schädigung der Zellen nachteilig sein. Die Inkubation bei RT wird bevorzugt. Der Prozess wird dadurch einfacher, da keine Kühlung notwendig ist. Es ist überraschend, dass DMSO auch ohne Kühlung keinen schädigenden Einfluss auf das Gewebe bzw. die hierin enthaltenen Zellen zeigt.
c. Gestaltung des Einfrierverlaufs (Temperaturabsenkung schnell oder langsam):
   Bevorzugt wird ein Temperaturverlauf mit langsamer Temperaturabsenkung (1°C/min) verwendet. Derselbe Temperaturverlauf wird auch für Nabelschnurblut verwendet. Das Einfrieren dauert ca. 65 Minuten.
d. Auswahl eines Einfriergefäßes:
   Derzeit wird ein Beutel verwendet, mit dem Nabelschnurgewebe in drei Portionen eingefroren werden kann. Dies erlaubt dem Kunden dreimal im Laufe seines Lebens von seinem Stammzellreservoir gebrauch zumachen. Hintergrund der Überlegung ist, dass Nabelschnurgewebe ein Startmaterial für ganz unterschiedliche Stammzellarten ist (z. B. mesenchymale Stammzellen und endotheliale Vorläufer) und die medizinischen Indikationen sehr breit gefächert sind.

4. Methode zur Isolierung von Zellen aus dem Gewebe
a. Auswahl von Enzymen zur Freisetzung der Zellen aus dem Nabelschnurgewebe Um Nabelschnurgewebe zu verdauen sind Kollagenase und Hyaluronidase sehr gut geeignet. Auch Dispase ist bevorzugt. Die Zellausbeute lässt sich noch weiter steigern, wenn neben Kollagenase und Hyaluronidase weitere Enzyme eingesetzt werden. Papain führt zu einer fast dreifach erhöhten Zellausbeute, wobei die Zahl der proliferationsfähigen Zellen (CFU-f) annähernd gleich bleibt wie bei Dispase (Figur 4). Die Menge an isolierbaren primären (d. h. nicht vorher in vitro expandierten) Zellen ist mit diesem Protokoll höher als mit den herkömmlichen Protokollen des Standes der Technik.
b. In vitro Expansion möglicherweise nicht mehr nötig. Es ist überraschend, dass derart hohe Mengen vitaler und proliferationsfähiger Zellen aus Nabelschnurgewebe gewonnen werden können. Eine Expansion der Zellen in vitro vor einer möglichen Anwendung am Patienten ist nach dem bevorzugten Verfahren unter Umständen nicht mehr notwendig. Dies hätte zum Einen Zeit- und Kostenvorteile, zum Anderen aber auch Vorteile für den Patienten, da mit jeder Expansion in vitro das Risiko genetischer und/oder funktioneller Veränderungen der Zellen einhergehen. Wenn darauf verzichtet werden kann, bzw. eine geringere Expansion in vitro notwendig ist reduziert sich auch das Risiko solcher Zellveränderungen.

5. Methode zur Bestimmung der Zellzahl:
Bestimmung der Zellzahl mittels FACS durch Kernfärbung mit Acridin Orange und Totfärbung mittel Propidium Iodid. Durch Gating der kernhaltigen lebenden Zellen ist eine exakte Trennung von Zell- und Gewebebruchstücken möglich. Im Mikroskop ohne Fluoreszenz sind Zelltrümmer und echte lebende Zellen nicht von einander unterscheidbar. Die Quantifizierung erfolgt mittels Trucount Tubes von Becton Dickinson.

### Referenzen

1 Cavallo, C. et al. Comparison of alternative mesenchymal stem cell sources for cell banking and musculoskeletal advanced therapies. J Cell Biochem 112, 1418-1430, doi:10.1002/jcb.23058 (2011).
2 Zeddou, M. et al. The umbilical cord matrix is a better source of mesenchymal stem cells (MSC) than the umbilical cord blood. Cell biology international 34, 693-701, doi:10.1042/CB120090414 (2010).
3 Can, A. & Balci, D. Isolation, culture, and characterization of human umbilical cord stromaderived mesenchymal stem cells. Methods Mol Biol 698, 51-62, doi:10.1007/978-1-60761-999-4_5 (2011).
4 Tsagias, N., Koliakos, I., Karagiannis, V., Eleftheriadou, M. & Koliakos, G. G. Isolation of mesenchymal stem cells using the total length of umbilical cord for transplantation purposes. Transfus Med 21, 253-261, doi:10.1111/j.1365-3148.2011.01076.x (2011).
5 Kabi, F. in Ampicillin/Sulbactam - Gebrauchs- und Fachinformationen; Zulassungsnummer: 60823.00.00, 60823.01.00, 60823.02.00 (Fresenius Kabi, Bad Homburg, Germany, 2009).
6 Braun, B. in Gentamicin - Gebrauchs- und Fachinformation; Zulassungsnummer: 67227.00.00, 67228.00.00 (B. Braun Melsungen AG, Melsungen, Germany, 2011).
7 Gong, W. et al. Banking human umbilical cord-derived mesenchymal stromal cells for clinical use. Cell transplantation 21, 207-216, doi:10.3727/096368911X586756 (2012).
8 Ganchas Soares, R. I. E. A. d. R. Q. d. M. E. A. N. E. I. I. L. P. O. *et al.* OPTIMISED AND DEFINED METHOD FOR ISOLATION AND PRESERVATION OF PRECURSOR CELLS FROM HUMAN UMBILICAL CORD. WO patent WO 2009/044379 A3R4 (2009).
9 Kikuchi-Taura, A. et al. Human umbilical cord provides a significant source of unexpanded mesenchymal stromal cells. Cytotherapy 14, 441-450, doi:10.3109/14653249.2012.658911 (2012).
10 Salehinejad, P. et al. Comparison of different methods for the isolation of mesenchymal stem cells from human umbilical cord Wharton's jelly. In Vitro Cell Dev Biol Anim 48, 75-83, doi:10.1007/s11626-011-9480-x (2012).
11 Lu, L. L. et al. Isolation and characterization of human umbilical cord mesenchymal stem cells with hematopoiesis-supportive function and other potentials. Haematologica 91, 1017-1026 (2006).
12 Guo, J. et al. Xenogeneic immunosuppression of human umbilical cord mesenchymal stem cells in a major histocompatibility complex-mismatched allogeneic acute graft-versus-host disease murine model. European journal of haematology 87, 235-243, doi:10.1111/j.1600-0609.2011.01635.x (2011).
13 De Bruyn, C. et al. A rapid, simple, and reproducible method for the isolation of mesenchymal stromal cells from Wharton's jelly without enzymatic treatment. Stem Cells Dev 20, 547-557, doi:10.1089/scd.2010.0260 (2011).
14 Fong, C. Y. et al. Derivation efficiency, cell proliferation, freeze-thaw survival, stem-cell properties and differentiation of human Wharton's jelly stem cells. Reproductive biomedicine online 21, 391-401, doi:10.1016/j.rbmo.2010.04.010 (2010).
15 Cho, J.-j. C. A. Y.-d. Y.-g. S. METHOD FOR THE SIMULTANEOUS PRIMARY-ISOLATION AND EXPANSION OF ENDOTHELIAL STEM/PROGENITOR CELL AND MESENCHYMAL STEM CELL DERIVED FROM MAMMAL INCLUDING HUMAN UMBILICAL CORD. WO patent WO 2008/060037 A1 (2008).
16 Davies, J. E. G. A. T. O. M. R. J., Baksh, D. W. T. M. O. L. W. H., Sarugaser, R. R. C. T. O. M. J. C., Hosseini, M. B. B. & Lickorish, A. D. S. S. M. S. A. T. O. M. Y. R. PROGENITOR CELLS FROM WHARTON'S JELLY OF HUMAN UMBILICAL CORD. EP patent EP 1594957 B1 (2010).
17 Weiss, M. L. M. K. S., Troyer, D. L. M. K. S., Davis, D. W. K. S. & Mitchell, K. E. C. M. D. CULTURES, PRODUCTS AND METHODS USING UMBILICAL CORD MATRIX CELLS. US patent US 2010/0284978 A1 (2010).
18 Mistry, S. D. P. A. *et al.* POSTPARTUM CELLS DERIVED FROM UMBILICAL CORD TISSUE, AND METHODS OF MAKING AND USING THE SAME. US patent US 2010/0210013 A1 (2010).
19 Cho, H. et al. Neural differentiation of umbilical cord mesenchymal stem cells by sub-sonic vibration. Life sciences 90, 591-599, doi:10.1016/j.lfs.2012.02.014 (2012).
20 Baba, K. et al. Osteogenic potential of human umbilical cord-derived mesenchymal stromal cells cultured with umbilical cord blood-derived autoserum. Journal of cranio-maxillo-facial surgery : official publication of the European Association for Cranio-Maxillo-Facial Surgery 40, 768-772, doi:10.1016/j.jcms.2012.02.006 (2012).
21 Zhou, C. et al. Immunomodulatory effect of human umbilical cord Wharton's jelly-derived mesenchymal stem cells on lymphocytes. Cell Immunol 272, 33-38, doi:10.1016/j.cellimm.2011.09.010 (2011).
22 Morikawa, S. et al. Prospective identification, isolation, and systemic transplantation of multipotent mesenchymal stem cells in murine bone marrow. J Exp Med 206, 2483-2496, doi:10.1084/jem.20091046 (2009).
23 Rombouts, W. J. & Ploemacher, R. E. Primary murine MSC show highly efficient homing to the bone marrow but lose homing ability following culture. Leukemia 17, 160-170, doi:10.1038/sj.leu.2402763 (2003).
24 Kramer, B. C. P. A. P. N. J. & Herzberg, U. M. S. B. N. J. UMBILICAL CORD TISSUE DERIVED CELLS FOR TREATING NEUROPATHIC PAIN AND SPASTICITY. WO patent WO 2010/071862 A1 (2010).
25 Phan, T.-T. S. Isolation and Cultivation of Stem/Progenitor Cells From the Amniotic Membrane of Umbilical Cord and Uses of Cells Differentiated Therefrom. US patent US 2008/0248005 A1 (2008).
26 Weiss, M. M. C. M. K. S. *et al.* USE OF UMBILICAL CORD MATRIX CELLS. WO patent WO 2008/116160 A1 (2008).
27 Cohen, M. S. C. W. O. N. J. & Cohen, J. B. P. W. O. N. J. UMBILICAL CORD STEM CELL SECRETED PRODUCT DERIVED TOPICAL COMPOSITIONS AND METHODS OF USE THEREOF. WO patent WO 2008/082525 A1 (2008).
28 Weiss, M. L. et al. Human umbilical cord matrix stem cells: preliminary characterization and effect of transplantation in a rodent model of Parkinson's disease. Stem Cells 24, 781-792, doi: 10.1634/stemcells.2005-0330 (2006).
29 Elchalal, U. et al. Postpartum umbilical cord blood collection for transplantation: A comparison of three methods. Am J Obstet Gynecol 182, 227-232. doi:10.1016/S0002-9378(00)70517-5 (2000).
30 Prat, I. et al. Transplantation perspectives in umbilical cord blood banks. Transfus Apher Sci 38, 193-197, doi: 10.1016/j.transci.2008.03.007 (2008).
31 Armitage, S. et al. Cord blood banking in London: the first 1000 collections. Bone Marrow Transplant. 24, 139-145, doi:10.1038/sj.bmt.1701881 (1999).
32 Friedman, R. et al. Umbilical cord mesenchymal stem cells: Adjuvants for human cell transplantation. Biol Blood Marrow Transplant. 13, 1477-1486, doi: 10.1016/j.bbmt.2007.08.048 (2007).
33 Imdad, A. et al. Umbilical cord antiseptics for preventing sepsis and death among newborns. Cochrane Database Syst Rev. 31.5 doi: 10.1002/14651858.CD008635 (2013).
34 Soofi, S. et al. Topical application of chlorhexidine to neonatal umbilical cords for prevention of omphalitis and neonatal mortality in a rural district of Pakistan: a community-based, cluster-randomised trial. Lancet.17, 1029-1036, doi: 10.1016/S0140-6736(11)61877-1 (2012).
35 Oishi, T. et al. Double-blind comparative study on the care of the neonatal umbilical cord using 80% ethanol with or without chlorhexidine. J Hosp Infecf. 58, 34-7. doi: 10.1016/j.jhin.2004.03.027 (2004)

## Patentansprüche

1. Verfahren zur Desinfektion von Nabelschnur oder Nabelschnurgewebe,
**dadurch gekennzeichnet, dass**
die Nabelschnur/ das Nabelschnurgewebe mit einer Lösung, die Polyhexanid umfasst, gewaschen wird.

2. Verfahren zur Konservierung von Nabelschnur oder Nabelschnurgewebe,
**dadurch gekennzeichnet, dass**
das zu konservierende Nabelschnurgewebe oder die Nabelschnur gemäß Anspruch 1 gewaschen wird und bevorzugt gekühlt wird.

3. Verfahren nach Anspruch 1 oder 2,
**dadurch gekennzeichnet, dass**
es die folgenden Schritte umfasst
a) Bereitstellung der Nabelschnur
b) Waschung der Nabelschnur mit einer Lösung, die Polyhexanid umfasst,
c) ggf. Zerkleinerung der Nabelschnur und
d) Kühlen oder Einfrieren der zerkleinerten Nabelschnur.

4. Verfahren nach einem der vorhergehenden Ansprüche,
**dadurch gekennzeichnet, dass**
das Nabelschnurgewebe vor der Waschung in einer Transportlösung aufbewahrt wird, wobei die Transportlösung eine isotonische Kochsalzlösung ist, zusätzlich umfassend Gentamicin, Clindamycin und/oder Ciprofloxacin.

5. Verfahren nach einem der vorhergehenden Ansprüche,
**dadurch gekennzeichnet, dass**
die Waschung der Nabelschnur oder des Nabelschnurgewebes mit der Polyhexanidumfassenden Lösung innerhalb eines Zeitraums von 15 Minuten - 50 Minuten erfolgt, bevorzugt 20 - 40 Minuten, besonders bevorzugt 30 Minuten.

6. Verfahren nach einem der vorhergehenden Ansprüche,
**dadurch gekennzeichnet, dass**
das Zerkleinern als ein Zerschneiden erfolgt, insbesondere als ein Zerschneiden in Scheiben mit einer Scheibendicke im Bereich von 3 - 10 mm, bevorzugt 4 - 8 mm.

7. Verfahren nach einem der vorhergehenden Ansprüche,
**dadurch gekennzeichnet, dass**
im Rahmen des Einfriervorganges eine Vorinkubation mit einem Konservierungsmittel erfolgt.

8. Verfahren nach einem der vorhergehenden Ansprüche,
**dadurch gekennzeichnet, dass**
das Einfrieren in einem flüssigen Medium erfolgt, welches 5 - 20 Vol-% DMSO umfasst, bevorzugt 10 Vol-%.

9. Verfahren nach einem der vorhergehenden Ansprüche,
**dadurch gekennzeichnet, dass**
das Einfrieren des Nabelschnurgewebes in mehreren Portionen erfolgt, wobei
- das Nabelschnurgewebe in einem geschlossenen System mit einem Konservierungsmittel inkubiert und
- ohne Öffnung des Systems eine Verteilung der Nabelschnurscheiben in mehrere Behältnisse und
- die Trennung der Behältnisse voneinander ebenfalls ohne Öffnung des Systems erfolgt.

10. Verfahren nach einem der vorhergehenden Ansprüche,
**dadurch gekennzeichnet, dass**
das Einfrieren mit einem Temperaturverlauf von 0,5° - 60° C, bevorzugt 1° - 10° C, besonders bevorzugt 1 °C pro Minute erfolgt.

11. Verfahren nach einem der vorhergehenden Ansprüche,
**dadurch gekennzeichnet, dass**
nach dem Zerkleinern der Nabelschnur/ des Nabelschnurgewebes dieses mit Enzymen umfassend Kollagenase, Hyaluronidase und/oder Papain in Kontakt gebracht wird.

12. Verfahren nach einem der vorhergehenden Ansprüche,
**dadurch gekennzeichnet, dass**
die Zellisolierung mit Hilfe einer Dichtegradientenzentrifugation erfolgt, bevorzugt mit einem Trennmedium, welches die Abscheidung von vitalen Zellen von übrigen Bestandteilen des Nabelschnurgewebes erlaubt.

13. Verfahren nach einem der vorhergehenden Ansprüche,
**dadurch gekennzeichnet, dass**
aus dem Nabelschnurgewebe Zellen, insbesondere Stamm- und Progenitorzellen isoliert werden.

14. Verwendung des Verfahrens nach einem der Ansprüche 1 - 13 zur Aufbewahrung von in Nabelschur oder Nabelschnurgewebe enthaltenden Stammzellen.

15. Verwendung nach dem vorhergehenden Anspruch
**dadurch gekennzeichnet, dass**
eine Zellzahlbestimmung mit Acridin Orange erfolgt.

## Claims

1. Method for the disinfection of umbilical cord or umbilical cord tissue,
**characterised in that**
said umbilical cord / umbilical cord tissue is washed with a solution comprising polyhexanide

2. A method of preserving umbilical cord or umbilical cord tissue,
**characterised in that**
said umbilical cord or umbilical cord tissue to be preserved is washed according to claim 1 and is preferably cooled.

3. The method according to claim 1 or 2,
**characterised in that**
it comprises the following steps
a) providing said umbilical cord
b) washing said umbilical cord with a solution comprising polyhexanide,
c) optionally comminuting said umbilical cord, and
d) cooling or freezing said comminuted umbilical cord.

4. The method of any one of the preceding claims, **characterised in that**
said umbilical cord tissue is stored in a transport solution before said washing, wherein said transport solution is an isotonic saline solution, additionally comprising gentamicin, clindamycin and/or ciprofloxacin.

5. The method according to any one of the preceding claims, **characterised in that**
said washing of said umbilical cord or umbilical cord tissue with said solution comprising polyhexanide takes place within a period of 15 minutes - 50 minutes, preferably 20 to 40 minutes, particularly preferably 30 minutes.

6. The method according to any one of the preceding claims, **characterised in that**
said comminuting takes place as cutting, in particular cutting into slices with a slice thickness in the range of 3 - 10 mm, preferably 4 - 8 mm.

7. The method according to any one of the preceding claims, **characterised in that**
a pre-incubation with a preservative takes place during the freezing process.

8. The method according to any one of the preceding claims, **characterised in that**
the freezing is carried out in a liquid medium comprising 5 - 20% by volume of DMSO, preferably 10% by volume.

9. The method according to any one of the preceding claims, **characterised in that**
said freezing of said umbilical cord tissue takes place in several portions, wherein
- said umbilical cord is incubated with a preservative in a closed system, and
- without opening said system, an allocation of said umbilical cord slices is made in several containers, and
- the separation of said containers from one another also takes place without opening said system.

10. The method according to any one of the preceding claims, **characterised in that**
said freezing takes place with a temperature profile of 0.5 °C - 60 °C, preferably 1 °C - 10 °C, particularly preferably 1 °C/min.

11. The method according to any one of the preceding claims, **characterised in that**
after comminution of said umbilical cord/umbilical cord tissue, it is contacted with enzymes comprising collagenase, hyaluronidase and/or papain.

12. The method according to any one of the preceding claims, **characterised in that**
cell isolation is carried out using density gradient centrifugation, preferably with a separation medium which allows separation of vital cells from other components of said umbilical cord tissue.

13. The method according to any one of the preceding claims, **characterised in that**
cells, in particular stem cells and progenitor cells, are isolated from said umbilical cord tissue.

14. Use of the method according to any one of claims 1 - 13 for storage of stem cells contained in umbilical cord or umbilical cord tissue.

15. Use according to the preceding claim
**characterised in, that**
a cell count determination takes place with acridine orange.

## Revendications

1. Procédé de désinfection d'un cordon ombilical ou tissu de cordon ombilical,
**caractérisé en ce que**
le cordon ombilical / le tissu de cordon ombilical est lavé avec une solution qui comporte du polyhexanide.

2. Procédé de conservation d'un cordon ombilical ou tissu de cordon ombilical,
**caractérisé en ce que**
le tissu de cordon ombilical à conserver ou le cordon ombilical est lavé selon la revendication 1 et est de préférence refroidi.

3. Procédé selon la revendication 1 ou 2,
**caractérisé en ce que**
comporte les étapes suivantes :
a) mise à disposition du cordon ombilical,
b) lavage du cordon ombilical avec une solution qui comporte du polyhexaméthylène,
c) éventuellement fragmentation du cordon ombilical et
d) refroidissement ou congélation du cordon ombilical fragmenté.

4. Procédé selon l'une quelconque des revendications précédentes, **caractérisé en ce que**
le tissu de cordon ombilical est conservé avant le lavage dans une solution de transport, dans lequel la solution de transport est une solution saline isotonique, en outre comprenant de la gentamicine, de la clindamycine et/ou de la ciprofloxacine.

5. Procédé selon l'une quelconque des revendications précédentes, **caractérisé en ce que**
le lavage du cordon ombilical ou du tissu de cordon ombilical est effectué avec la solution comprenant du polyhexaméthylène pendant une période de 15 à 50 minutes, de préférence de 20 à 40 minutes, de manière particulièrement préférée de 30 minutes.

6. Procédé selon l'une quelconque des revendications précédentes, **caractérisé en ce que**
la fragmentation est effectuée comme une découpe, en particulier comme une découpe en disques avec une épaisseur de disque dans la plage de 3 à 10 mm, de préférence de 4 à 8 mm.

7. Procédé selon l'une quelconque des revendications précédentes, **caractérisé en ce que**
dans le cadre du procédé de congélation, une préincubation est effectuée avec un moyen de conservation.

8. Procédé selon l'une quelconque des revendications précédentes, **caractérisé en ce que**
la congélation est effectuée dans un agent liquide qui comporte 5 à 20 % en volume de DMSO, de préférence 10 % en volume.

9. Procédé selon l'une quelconque des revendications précédentes, **caractérisé en ce que**
la congélation du tissu de cordon ombilical est effectuée en plusieurs parties, dans lequel
- le tissu de cordon ombilical incube dans un système fermé avec un moyen de conservation et
- sans ouverture du système une répartition des disques de cordon ombilical dans plusieurs récipients et
- la séparation des récipients les uns des autres est aussi effectuée sans ouverture du système.

10. Procédé selon l'une quelconque des revendications précédentes,
**caractérisé en ce que**
la congélation est effectuée avec une courbe de température de 0,5 à 60 °C, de préférence de 1 à 10 °C, de manière particulièrement préférée de 1 °C par minute.

11. Procédé selon l'une quelconque des revendications précédentes,
**caractérisé en ce que**
après la fragmentation du cordon ombilical / du tissu de cordon ombilical, celui-ci est amené en contact avec des enzymes comprenant de la collagénase, de l'hyaluronidase et/ou de la papaïne.

12. Procédé selon l'une quelconque des revendications précédentes,
**caractérisé en ce que**
l'isolation de cellule est effectuée à l'aide d'une centrifugation à gradient de densité, de préférence avec un agent de séparation qui permet la séparation de cellules vitales, des constituants restants du tissu de cordon ombilical.

13. Procédé selon l'une quelconque des revendications précédentes,
**caractérisé en ce que**
des cellules, en particulier des cellules souches et progénitrices sont isolées du tissu de cordon ombilical.

14. Utilisation du procédé selon l'une quelconque des revendications 1 à 13 pour la conservation de cellules souches contenues dans le cordon ombilical ou tissu de cordon ombilical.

15. Utilisation selon la revendication précédente, **caractérisée en ce qu'**une
détermination du nombre de cellule est effectuée avec de l'acridine orange.
